# EUROPÄISCHE PATENTSCHRIFT

(11) **EP 0 401 672 B1**
(45) Veröffentlichungstag und Bekanntmachung des Hinweises auf die Patenterteilung: **06.10.1993**
(21) Anmeldenummer: 90110316.8
(22) Anmeldetag: 30.05.1990
(51) Int. Cl.: H01S 3/03, G01C 19/66

(54) **Ringlaserkreisel**
Ring laser gyroscope
Gyroscope à laser en anneau

(30) Priorität: 02.06.1989 DE 3918048
(43) Veröffentlichungstag der Anmeldung: 12.12.1990
(73) Patentinhaber: HONEYWELL AG, 63067 Offenbach (DE)
(72) Erfinder: Esskuchen, Uwe, Dipl.-Ing., D-6759 Essweiler (DE); Hansli, Werner, Dipl.-Ing., D-6146 Alsbach 1 (DE)
(74) Vertreter: Herzbach, Dieter, Dipl.-Ing.

(56) Entgegenhaltungen:
- EP-A- 0 209 279
- FR-A- 2 030 688
- US-A- 3 469 922

## Beschreibung

Die vorliegende Erfindung bezieht sich auf einen Ringlaserkreisel nach dem Gattungsbegriff des Patentanspruches 1.

Ein solcher Ringlaserkreisel ist z.B. aus der DE-OS 28 39 066 bekannt. Dort sind symmetrisch zur Mittellinie einer dreieckförmigen Laserstruktur auf den Schenkeln eines Laserblocks zwei Anoden und auf der Grundlinie des Laserblockes eine Kathode angeordnet. Bei der dort getroffenen Struktur erstrecken sich die beiden Teilentladungsstrecken zwischen den Anoden und der Kathode über zwei Eckpunkte der dreieckförmigen Laserstruktur, in denen Spiegel mit einer empfindlichen hochreflektierenden Beschichtung angeordnet sind. Diese Spiegel erfahren durch den starken Beschuß mit Ionen bzw. Elektronen aus dem Gasplasma eine Verschlechterung ihrer Güte, was zu einer verminderten Lebensdauer des Ringlaserkreisels führt. Um die Beeinträchtigung der Spiegel zu vermeiden, ist es aus der FR-PS 20 30 688 bereits bekannt Barrieren vor jedem Spiegel vorzusehen, um die Gasentladungsstrecke von den Spiegeln fernzuhalten und andererseits über in den Barrieren enthaltene Bohrungen dem Laserstrahl das Auftreffen auf den Spiegel zu ermöglichen.

Ausgehend von diesem Stand der Technik ist es die Aufgabe der vorliegenden Erfindung, einen Ringlaserkreisel mit erhöhter Lebensdauer anzugeben, wobei dies durch eine entsprechende Ausgestaltung des Laserblocks ohne zusätzliche Elemente gewährleistet sein soll. Die Lösung dieser Aufgabe gelingt gemäß den kennzeichnenden Merkmalen des Patentanspruches 1. Weitere vorteilhafte Ausgestaltungen des erfindungsgemäßen Ringlaserkreisels sind den abhängigen Ansprüchen entnehmbar.

Die Erfindung sieht die Anordnung von speziellen Verbindungsbohrungen vor, durch die die Ladungsteilchen des Plasmas beim Wandern zwischen den Elektroden an den Eckspiegeln vorbeigeführt werden, was zu einer Erhöhung der Lebensdauer des Ringlaserkreisels führt.

Die ferner getroffene Lösung mit zwei Kathoden und einer Anode gestattet die Stromdichte auf den Kathoden zu reduzieren und damit Sputterprozesse im wesentlichen zu verhindern. Ferner wird die durch den Ionenbeschuß hervorgerufene Ausgasung des Kathodenmaterials und die damit verbundene Gasverunreinigung verringert, was ebenfalls zu einer Erhöhung der Lebensdauer des Ringlaserkreisels beiträgt.

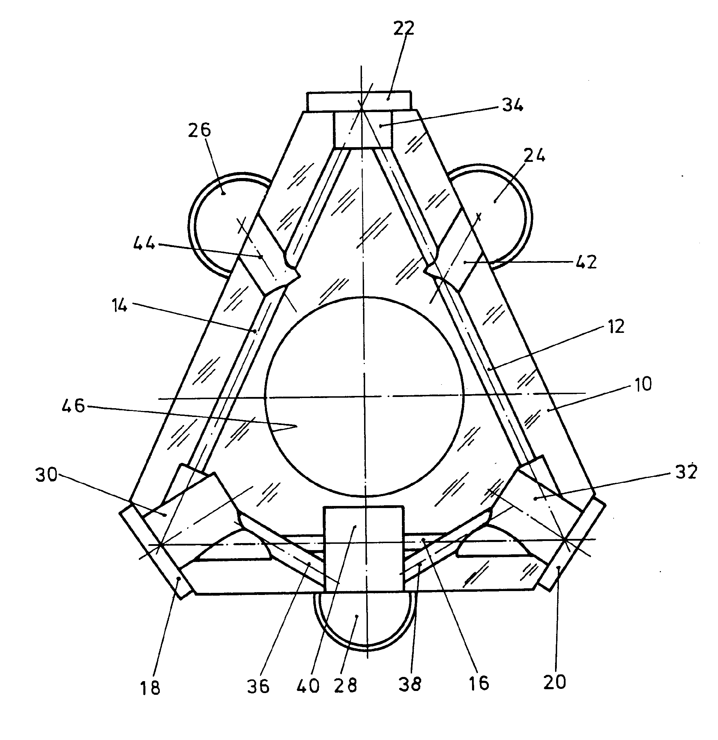

Anhand der einzigen Figur der beiliegenden Zeichnung sei im folgenden eine Ausführungsbeispiel des erfindungsgemäßen Ringlaserkreisels näher beschrieben.

Gemäß der einzigen Figur weist ein gleichschenkliger Laserblock 10 parallel zu seinen Seitenwänden Bohrungen 12, 14 und 16 auf, die in den Eckpunkten durch Spiegel 18, 20, 22 abgeschlossen sind und somit einen Hohlraumresonator bilden. Um zwei gegenläufige Laserstrahlen zu erzeugen und eine Gasentladung in Gang zu bringen, sind symmetrisch zur Mittellinie des gleichschenkligen Dreiecks auf den beiden Schenkeln des Blockes 10 zwei Kathoden 24 und 26 und auf der Grundlinie des Blockes 10 eine Anode 28 angeordnet.

In den Eckpunkten des Laserblockes 10 münden die Bohrungen 12, 14 und 16 jeweils in Gasfreibohrungen 30, 32, 34, durch die das enthaltene Gasvolumen vergrößert wird.

Schräg angesetzte Verbindungsbohrungen 36, 38 schließen zwischen sich und der Grundlinie des gleichschenkligen Laserblockes 10 einen Winkel ein und verbinden eine mit der Anode 28 verbundene Ausnehmung 40 mit den Gasfreibohrungen 30 und 32, wobei sie die einen Teil der Laserstrecke bildende Bohrung 16 kreuzen. Ionen und Elektronen des Plasmas werden auf diese Weise auf ihrem Weg von und zu der Anode 28 an den Spiegeln 18 und 20 vorbeigeführt

Die Kathoden 24 und 26 stehen über schräg angesetzte Ausnehmungen 42 und 44 mit den Bohrungen 12 und 14 in Verbindung, wobei die Ausnehmungen in Richtung auf die Entladungsstrecke geneigt sind.

Eine kreisförmige zentrale Ausnehmung 46 ist in dem Laserblock 10 vorgesehen und dient der Aufnahme einer an sich bekannten Vibrationseinrichtung, um den Ringlaserkreisel in eine Drehschwingung zu versetzen.

## Patentansprüche

1. Ringlaserkreisel mit einer dreieckförmigen Blockstruktur (10) und mit einer symmetrischen Elektrodenanordnung (24,26,28) auf den drei Seiten der dreieckförmigen Blockstruktur zur Erzeugung einer Gasentladung in zwei Teilentladungsstrecken jeweils über einen Eckpunkt der Blockstruktur und damit zweier gegenläufiger Laserstrahlen in einer Laserstrecke, mit die Laserstrecke bildenden Bohrungen (12,14,16) sowie mit einen Resonator bildenen Spiegeln (18,20,22) und das Gasvolumen vergrößernden Gasfreibohrungen (30,32) in den Eckpunkten der dreieckförmigen Blockstruktur, **dadurch gekennzeichnet**, daß die auf der Grundlinie angeordnete, den beiden Teilentladungsstrecken gemeinsame Elektrode (28) über Verbindungsbohrungen (36, 38), die einen von Null abweichenden Winkel mit der Grundlinie der Blockstruktur einschließen, mit den benachbarten Gasfreibohrungen (30, 32) verbunden ist, derart daß die geladenen Teilchen des Plasmas der Gasentladung an den Spiegeln vorbeigeführt werden.

2. Ringlaserkreisel nach Anspruch 1 mit einer Laserstrecke parallel zu den Seiten der dreieckförmigen Blockstruktur, **dadurch gekennzeichnet**, daß die Verbindungsbohrungen (36, 38) die Laserstrecke (16) kreuzen.

3. Ringlaserkreisel nach Anspruch 2, **dadurch gekennzeichnet**, daß die auf der Grundlinie angeordnete Elektrode durch die Anode (28) vorgegeben ist und daß demgemäß die Kathoden (24, 26) auf den Schenkeln der dreieckförmigen Blockstruktur angeordnet sind.

4. Ringlaserkreisel nach Anspruch 3, **dadurch gekennzeichnet**, daß die Kathoden (24, 26) über schräg angebrachte Bohrungen (42, 44) mit der Laserstrecke (12, 14) in Verbindung stehen, wobei die Bohrungen (42, 44) in Richtung auf die durch die Kathoden/Anodenanordnung vorgegebenen Entladungsstrecken geneigt sind.

## Claims

1. Ring laser gyro having a triangular-shaped block structure (10) and a symmetrical electrode arrangement (24,26,28) on the three sides of said triangular-shaped block structure for producing a gas discharge in two partial discharge paths each around one corner point of the block structure and therefore two counter-propagating laser beams along a laser path, comprising bores (12,14,16) defining the laser path as well as mirrors (18,20,22) defining a resonator and gas reaming bores (30,32) in the corner points of said triangular-shaped block structure for enlarging the gas volume, **characterized in that** the electrode (28) being common to both partial discharge paths and being arranged on the base leg is connected via connection bores (36,38) to the neighboured gas reaming bores (30,32) with said connection bores forming an angle with the base leg of the block structure which angle differs from zero so that the charged particles of the plasma of the gas discharge are passing the mirrors.

2. Ring laser gyro according to claim 1 comprising a laser path parallel to the legs of the triangular-shaped block structure, **characterized in that** the connection bores (36,38) are crossing the laser path (16).

3. Ring laser gyro according to claim 2, **characterized in that** the electrode arranged on the base leg is presented by the anode (28) and that therefore the cathodes (24,26) are arranged on the side legs of the triangular-shaped block structure.

4. Ring laser gyro according to claim 3, **characterized in that** the cathodes (24,26 are connected to the laser path via oblique bores (42,44) whereat said oblique bores (42,44) are tilted with respect to the discharge path provided by the cathode/anode arrangement.

## Revendications

1. Gyroscope à laser en anneau comportant une structure en bloc (10) de forme triangulaire et un agencement symétrique d'électrodes (24, 26, 28) sur les trois côtés de la structure en bloc de forme triangulaire pour produire une décharge gazeuse dans deux trajets partiels de décharge passant chacun par un sommet de la structure en bloc, et ainsi deux rayons laser de sens opposés dans un trajet de laser, et comportant également des alésages (12, 14, 16) formant le trajet de laser, ainsi que des miroirs (18, 20, 22) formant un résonateur, et, aux sommets de la structure en bloc, des alésages de dégagement pour le gaz (30, 32) qui augmentent le volume de gaz, caractérisé en ce que l'électrode (28) disposée sur la base et commune aux deux trajets partiels de décharge, est reliée aux alésages de dégagement pour le gaz (30, 32) voisins, par l'intermédiaire d'alésages de liaison (36, 38), qui enferment avec la base de la structure en bloc, un angle différent de zéro, de manière à ce que les particules chargées du plasma de la décharge gazeuse soient amenées à passer au-devant les miroirs.

2. Gyroscope à laser en anneau selon la revendication 1 comportant un trajet de laser, parallèle aux côtés de la structure en bloc de forme triangulaire, caractérisé en ce que les alésages de liaison (36, 38) croisent le trajet de laser (16).

3. Gyroscope à laser en anneau selon la revendication 2, caractérisé en ce que l'électrode disposée sur la base est définie comme étant l'anode (28), et qu'en conséquence les cathodes (24, 26) sont disposées sur les côtés de la structure en bloc de forme triangulaire.

4. Gyroscope à laser en anneau selon la revendication 3, caractérisé en ce que les cathodes (24, 26) sont en communication avec le trajet de laser (12, 14), par l'intermédiaire d'alésages (42, 44) disposés de manière oblique, les alésages (42, 44) étant inclinés en direction des trajets de décharge prédéfinis par la disposition cathode/anode.
